# EUROPÄISCHE PATENTSCHRIFT

(11) **EP 3 092 150 B1**
(45) Veröffentlichungstag und Bekanntmachung des Hinweises auf die Patenterteilung: **24.02.2021**
(21) Anmeldenummer: 14827242.0
(22) Anmeldetag: 30.12.2014
(51) Int. Cl.: H01M 10/42, B60L 50/50, H02J 7/00

(54) **ELEKTROCHEMISCHER ENERGIESPEICHER UND VERFAHREN ZUM BALANCING**
ELECTROCHEMICAL ENERGY ACCUMULATOR AND BALANCING METHOD
ACCUMULATEUR D'ÉNERGIE ÉLECTROCHIMIQUE ET PROCÉDÉ D'ÉQUILIBRAGE

(30) Priorität: 10.01.2014 DE 102014200329
(43) Veröffentlichungstag der Anmeldung: 16.11.2016
(73) Patentinhaber: Robert Bosch GmbH, 70442 Stuttgart (DE)
(72) Erfinder: BUTZMANN, Stefan, 58579 Schalksmühle (DE)
(86) Internationale Anmeldenummer: PCT/EP2014/079449
(87) Internationale Veröffentlichungsnummer: WO 2015/104205

(56) Entgegenhaltungen:
- US-A1- 2007 105 010
- US-A1- 2008 211 459
- US-A1- 2012 319 657
- US-A1- 2013 300 369
- SRIRAM YARLAGADDA ET AL: "A Battery Management System using an active charge equalization technique based on a DC/DC converter topology", ENERGY CONVERSION CONGRESS AND EXPOSITION (ECCE), 2011 IEEE, IEEE, 17. September 2011 (2011-09-17), Seiten 1188-1195, XP032067305, DOI: 10.1109/ECCE.2011.6063911 ISBN: 978-1-4577-0542-7

## Beschreibung

### Stand der Technik

Die vorliegende Erfindung betrifft einen elektrochemischen Energiespeicher sowie ein Verfahren zum Balancing einer Vielzahl parallel zueinander geschalteter Stränge elektrochemischer Speichermodule eines elektrochemischen Energiespeichers. Elektrochemische Energiespeicher bestehen aus einzelnen Baueinheiten ("Modulen"), um die für manche Anwendungen erforderlichen hohen Ströme bereitstellen zu können, die von einem einzigen Modul nicht mehr bereitgestellt werden können. Für diese Anwendung ist es notwendig, Module parallel zu schalten. Dies ist wiederum mit Standardmodulen nicht ohne weiteres möglich, da Ausgleichsströme zwischen den Modulen fließen können, die zu unerwünschten Betriebszuständen führen können. Typischerweise enthalten die Module aktueller Akkumulatorzellen auf Lithium Chemie basierende Fluide. Diese Zellen sind sowohl gegenüber Überladung als auch gegenüber Tiefentladung empfindlich. Eine Überladung über ca. 4,2 V pro Zelle bzw. Modul resultiert in exothermen Prozessen, die zur Zerstörung der Zelle führen können. Eine Tiefentladung unter ca. 2,5 V pro Zelle bzw. Modul führt zu permanenter Degradation der Energiespeicher- und Stromtragfähigkeit der Zelle. Sind Zellen in Serie geschaltet, so werden sie nur zusammen geladen und entladen. Mit anderen Worten sind die Ladungsänderungen einer jeden Zelle des Strangs identisch. Unterschiede in der Zellbeschaffenheit führen nun dazu, dass der Ladezustand (state of charge, SOC) der Zellen mit zunehmender Nutzung nicht mehr identisch ist. Dies kann dazu führen, dass bei der Ladung einzelne Zellen überladen werden können, während andere Zellen noch nicht vollständig geladen sind. Die letztere Alternative birgt die Gefahr, dass bei der Entladung einzelne Zellen tiefentladen werden können, obwohl andere Zellen noch nicht vollständig entladen sind. Aus diesem Grunde wird der Zustand der Akkumulatorzellen permanent überwacht, und Ladung oder Entladung ggf. unterbunden. Ein auch als "Balancing" bezeichneter Ladeausgleich zwischen den Zellen eines Akkupacks ("elektrochemischer Energiereicher") verfolgt das Ziel, dass alle Zellen denselben SOC besitzen. Für das Balancing der Zellen innerhalb eines Moduls sorgt ein dafür ausgelegter integrierter Mess- und Balancingschaltkreis.

Zudem sind im Stand der Technik so genannte UniBB- (Universelle Buck-Boost) Module bekannt, welche einen elektrochemischen Energiespeicher (z. B. auf Lithium-Ionen- oder Lithium-Polymer-Basis) und eine elektrische Schaltung umfassen, mittels welcher sie unterschiedliche Klemmencharakteristika realisieren können. Beispielsweise kann ein UniBB-Modul sowohl als Spannungsquelle wie auch als Stromquelle verwendet werden. Die elektrische Schaltung innerhalb des UniBB-Moduls könnte auch als "Kopplungseinheit" bezeichnet werden, die eine Induktanz enthält. Der Aufbau und die Funktionsweise eines UniBB-Moduls ist beispielsweise aus dem Stand der Technik bekannt.

CN 102496970 zeigt ein Balancing System für einen elektrochemischen Energiespeicher eines elektrisch betriebenen Fortbewegungsmittels. Der elektrochemische Energiespeicher enthält zwei Speicherstränge, die parallel miteinander verbunden sind. Jeder der Speicherstränge enthält einzelne Speicherzellen. Über einen Widerstand und eine Kapazität wird ein SOC-Wert der Speicherstränge ermittelt und Energie einzelner Zellen auf andere Zellen mit einem niedrigeren SOC umgeschichtet.

US 2011/025258 zeigt einen Verbund elektrochemischer Speicherzellen, bei welchem Balancing unter Vermeidung von Überladung oder Tiefenentladung der Zellen erfolgt. Die Schrift offenbart eine Steuereinheit, welche den SOC der Zellen überwacht und die Zellen anhand ihres SOC in entladefähige und ladefähige Zellen gruppiert. In Abhängigkeit ihrer Gruppenzugehörigkeit werden die Zellen entweder einzeln oder gemeinsam geladen.

US 2009/208824 zeigt einen Verbund elektrochemischer Speicherzellen, die parallel miteinander verbunden sind. Die Zellen weisen einen jeweiligen Controller auf, der als Buck-Boost-Controller ausgestaltet sein kann. Sofern erkannt wird, dass die Zellen unterschiedliche Ladezustände aufweisen, wird die von den einzelnen Zellen entnommene Energie variiert. Auf diese Weise wird vermieden, dass unterschiedliche Zellen langfristig unterschiedliche Ladezustände aufweisen.

US 2012/0319657 A1 zeigt ein System mit einer Vielzahl von Batteriemodulen. Die Batteriemodule sind parallel zueinander angeordnet. Jedes Batteriemodul umfasst wenigstens eine Batterie, eine Batteriemanagementschaltung und einen bidirektionalen DC-DC-Konverter. Dabei ist jede Batteriemanagementschaltung dazu ausgebildet, einen Zustand des entsprechenden Batteriemoduls als Ganzes und/oder einen Zustand jeder Batterie des entsprechenden Batteriemoduls zu überwachen. Ferner ist jeder DC-DC-Konverter durch die entsprechende Batteriemanagementschaltung so ansteuerbar, dass ein Entladen und/oder ein Laden der wenigstens einen Batterie jedes Batteriemoduls anhand von Befehlen von der entsprechenden Batteriemanagementschaltung mittels des entsprechenden DC-DC-Konverters einstellbar ist. Dabei kann jeder DC-DC-Konverter ein bekannter Buck-Boost-Konverter sein.

XP 055067391 zeigt ein Verfahren zum Balancing einer Vielzahl von in Reihe geschalteten Batteriezellen eines Stranges mittels eines Buck-Bosst-Konverters. Dabei wird der Buck-Bosst-Konverter mit einer den höchsten Ladezustand aufweisenden Batteriezelle des Stranges eingangsseitig verbunden. Ferner wird der Buck-Boost-Konverter mit einer den niedrigsten Ladezustand aufweisenden Batteriezelle des Stranges ausgangsseitig verbunden.

Es ist eine Aufgabe der vorliegenden Erfindung, ein Balancing parallel geschalteter elektrochemischer Speicher zu verbessern.

### Offenbarung der Erfindung

Die vorstehend genannte Aufgabe wird erfindungsgemäß durch einen elektrochemischen Energiespeicher nach Anspruch 10 sowie ein Verfahren nach Anspruch 1 zum Balancing einer Vielzahl parallel zueinander geschalteter Stränge elektrochemischer Speichermodule mittels mindestens eines sowohl als Spannungsquelle wie auch als Stromquelle verwendbaren UniBB-Moduls gelöst. Das Verfahren umfasst ein Erkennen eines ersten Ladezustandes eines ersten Speichermoduls. Zusätzlich wird der Ladezustand eines zweiten Speichermoduls erkannt. Das erste und das zweite Speichermodul sind in unterschiedlichen Strängen angeordnet. Das zweite Speichermodul ist als UniBB-Modul ausgestaltet und wird als Stromquelle betrieben, um den ersten Ladezustand und den zweiten Ladezustand einander anzupassen. Indem das UniBB-Modul als Stromquelle betrieben wird, kann eine kontrollierte Umschichtung von Ladung zwischen dem ersten Speichermodul und dem zweiten Speichermodul erfolgen, ohne dass aufgrund starker Ladezustandsunterschiede und/oder starker Klemmenspannungsunterschiede unzulässig hohe Ausgleichsströme fließen würden.

Die Unteransprüche zeigen bevorzugte Weiterbildungen der Erfindung.

Bevorzugt ist auch das erste Speichermodul ein UniBB-Modul und wird während des vorstehend beschriebenen Balancings als Spannungsquelle betrieben. Insbesondere sind auch sämtliche weitere Speichermodule innerhalb des elektrochemischen Energiespeichers als UniBB-Module ausgestaltet. In diesem Fall werden sämtliche Speichermodule mit Ausnahme des zweiten Speichermoduls als Spannungsquelle betrieben. Auf diese Weise ist es möglich, das erfindungsgemäße Balancing durch jedes der Speichermodule als Stromquelle zu steuern.

Bevorzugt ist der zweite Ladezustand geringer als der erste Ladezustand. Mit anderen Worten wird dasjenige Speichermodul mit dem geringeren Ladezustand als Stromquelle geschaltet. Diese steuert nun einen Stromfluss, mittels welchem ihr eigener SOC angehoben wird. Alternativ kann auch der erste Ladezustand höher sein, sodass das erste Speichermodul als Stromquelle geschaltet wird und den eigenen SOC erhöht. Selbstverständlich ist auch ein Betreiben des jeweiligen Speichermoduls im Stromquellmodus derart möglich, dass das im Stromquellmodus befindliche Speichermodul den eigenen SOC absenkt.

Beispielsweise kann das erste Speichermodul in einem ersten Betriebsmodus aus der Gruppe "geregelt", "ungeregelt", "Buck" oder "Boost" betrieben werden. Entsprechend wird das zweite Speichermodul, welches in einem anderen Strang als das erste Speichermodul angeordnet ist, in einem zweiten Betriebsmodus derselben Gruppe betrieben, wobei der zweite Betriebsmodus bevorzugt nicht mit dem ersten Betriebsmodus identisch ist. Diese Konstellation vermeidet unzulässige Betriebszustände und insbesondere auch einen erhöhten Energieaufwand und Verschleiß beim Balancing.

Weiter bevorzugt können das erste Speichermodul ungeregelt und das zweite Speichermodul im Boost-Stromquellen-Betriebsmodus betrieben werden. Alternativ kann das erste Speichermodul im Buck-Lade-Modus und das zweite Speichermodul im Stromquellenmodus betrieben werden. Diese Konstellation stellt eine bevorzugte und besonders vorteilhafte Kombination zweier Betriebszustände in unterschiedlichen Strängen angeordneter Speichermodule dar.

Weiter bevorzugt umfasst die Vielzahl Speichermodule innerhalb des elektrochemischen Energiespeichers weitere elektrochemische Speichermodule. Diese werden in einen Sperrmodus versetzt, sofern sie am Balancing nicht beteiligten Strängen angehören und in einen Bypass-Modus versetzt, sofern sie am Balancing beteiligten Strängen angehören. Der Sperrmodus stellt dabei eine Unterbrechung des Stromkreises dar, während der Bypass-Modus einem äußeren Kurzschluss des jeweiligen Speichermoduls entspricht, sodass ein Stromfluss ungehindert an ihm vorbei stattfinden kann. Auf diese Weise ist eine einfache und effiziente Auswahl der am Balancing teilnehmenden Stränge möglich.

Sofern lediglich ein Speichermodul pro Strang enthalten ist, kann ein Speichermodul mit einem höchsten Ladezustand als Spannungsquelle und die übrigen, nicht in einen Sperrmodus versetzten elektrochemischen Speichermodule in einem Stromquellenmodus betrieben werden. Sofern jedoch mehr als ein Speichermodul pro Strang enthalten ist (mit anderen Worten sind in Serie geschaltete Speichermodule innerhalb des elektrochemischen Energiespeichers vorhanden) wird ein Speichermodul mit einem höchsten Ladezustand in einem Stromquellenmodus betrieben und die übrigen, nicht in einem Sperrmodus oder Bypass-Modus versetzten elektrochemischen Speichermodule werden in einem Spannungsquellenmodus betrieben. Auf diese Weise kann das Balancing mit einem geringstmöglichen elektrischen Verlust ausgeführt werden.

Weiter bevorzugt wird ein in die Vielzahl elektrochemischer Speichermodule eingeprägter Ladestrom in Abhängigkeit eines jeweiligen Ladezustands der Speichermodule gesteuert. Die Steuerung des Ladestroms erfolgt bevorzugt in einer solchen Weise, dass ein vordefinierter, insbesondere vollständiger Ladezustand der Speichermodule im Wesentlichen zu einem gleichen Zeitpunkt erreicht wird. Auf diese Weise kann der Ladevorgang zeitoptimiert erfolgen und die Verlustleistung weiter reduziert werden.

Weiter bevorzugt werden elektrochemische Speichermodule innerhalb des elektrochemischen Energiespeichers in einem Sperrmodus versetzt, sobald sie eine vordefinierte Höchstspannung erreicht haben. Dies erfolgt insbesondere in einem solchen Fall, in welchem das elektrochemische Speichermodul das einzige Speichermodul in seinem Strang ist. Sofern ein zweites Modul im Strang geladen werden muss, während ein erstes Speichermodul seine vordefinierte Höchstspannung erreicht hat, ist das vollständig geladene elektrochemische Speichermodul in einen Bypass-Modus zu versetzen, um einen Ladevorgang des verbliebenen Speichermoduls weiterhin zu ermöglichen. Erst wenn das letzte Speichermodul innerhalb eines jeweiligen Strangs seine Höchstspannung erreicht hat, geht zumindest eines der Speichermodule in einen Sperrmodus, um keine unnötigen elektrischen Verluste während des weiteren Balancing-Prozesses übriger Stränge zu produzieren.

Selbstverständlich kann ein Balancing auch im Betrieb der Vielzahl elektrochemischer Speichermodule eines elektrochemischen Energiespeichers vorgenommen werden. Hierzu werden die Stränge in Abhängigkeit eines jeweiligen durchschnittlichen Ladezustands an einem zu liefernden Gesamtstrom beteiligt, um im Wesentlichen einen gleichen Ladezustand anzunehmen. Eine strangweise Steuerung des Entladestroms kann eine besonders verlustreduzierte Variante des erfindungsgemäßen Balancings darstellen, da zum Balancing sämtliche Module einer Energieaufnahme (Ladevorgang) oder Energieabgabe (Entladevorgang) durchführen, ohne dass allein zu Balancing-Zwecken Ladung umgeschichtet würde.

Gemäß einem zweiten Aspekt der vorliegenden Erfindung wird ein elektrochemischer Energiespeicher vorgeschlagen, der eine Vielzahl parallel zueinander geschalteter Stränge elektrochemischer Speichermodule und eine Verarbeitungseinheit zur Durchführung eines Verfahrens gemäß dem erstgenannten Erfindungsaspekt umfasst. Dabei kann ein jeder Strang ein einzelnes elektrochemisches Speichermodul oder eine Vielzahl in Reihe geschalteter elektrochemischer Speichermodule umfassen. Die Speichermodule können entsprechend dem erstgenannten Erfindungsaspekt sämtlich als UniBB-Modul ausgestaltet sein, deren Arbeitsweise durch die übergeordnete Verarbeitungseinheit gesteuert bzw. koordiniert wird. In einer alternativen Ausgestaltung ist die Verarbeitungseinheit in einem elektrochemischen Speichermodul enthalten, welches (zeitweise) eine Master-Funktion übernimmt, indem sie das Verfahren gemäß dem erstgenannten Erfindungsaspekt durchführt bzw. koordiniert. Grundsätzlich kann ein jedes Speichermodul eine Verarbeitungseinheit umfassen, wodurch es zur Übernahme der vorstehend genannten Master-Funktion eingerichtet ist. Die Funktionsweise des erfindungsgemäßen elektrochemischen Energiespeichers ergibt sich entsprechend derjenigen des erstgenannten Erfindungsaspektes, sodass zur Beschreibung der Merkmale, Merkmalskombinationen und Vorteile zur Vermeidung von Wiederholungen auf die obenstehenden Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein Schaltbild eines Ausführungsbeispiels eines erfindungsgemäß verwendbaren UniBB-Moduls;
- Figur 2: ein Schaltbild eines alternativen Ausführungsbeispiels eines erfindungsgemäß verwendbaren UniBB-Moduls;
- Figur 3: ein schematisches Schaltbild zum parallelen Betrieb dreier elektrochemischer Speichermodule;
- Figur 4: ein schematisches Schaltbild zum Entladen parallel geschalteter elektrochemischer Speichermodule;
- Figur 5: ein schematisches Schaltbild zum Balancing parallel geschalteter elektrochemischer Speichermodule;
- Figur 6: ein schematisches Schaltbild zum Balancing parallel geschalteter elektrochemischer Speichermodule in einem anderen Betriebszustand;
- Figur 7: ein schematisches Schaltbild zum Betrieb paralleler Stränge elektrochemischer Speichermodule;
- Figur 8: ein schematisches Schaltbild zum Balancing parallel geschalteter Stränge elektrochemischer Speichermodule in einem ersten Betriebszustand;
- Figur 9: ein schematisches Schaltbild zum Balancing parallel geschalteter Stränge elektrochemischer Speichermodule in einem zweiten Betriebszustand;
- Figur 10: ein schematisches Schaltbild zum Balancing parallel geschalteter Stränge elektrochemischer Speichermodule in einem dritten Betriebszustand; und
- Figur 11: ein Flussdiagramm veranschaulichend Schritte eines Ausführungsbeispiels eines erfindungsgemäßen Verfahrens.

### Ausführungsformen der Erfindung

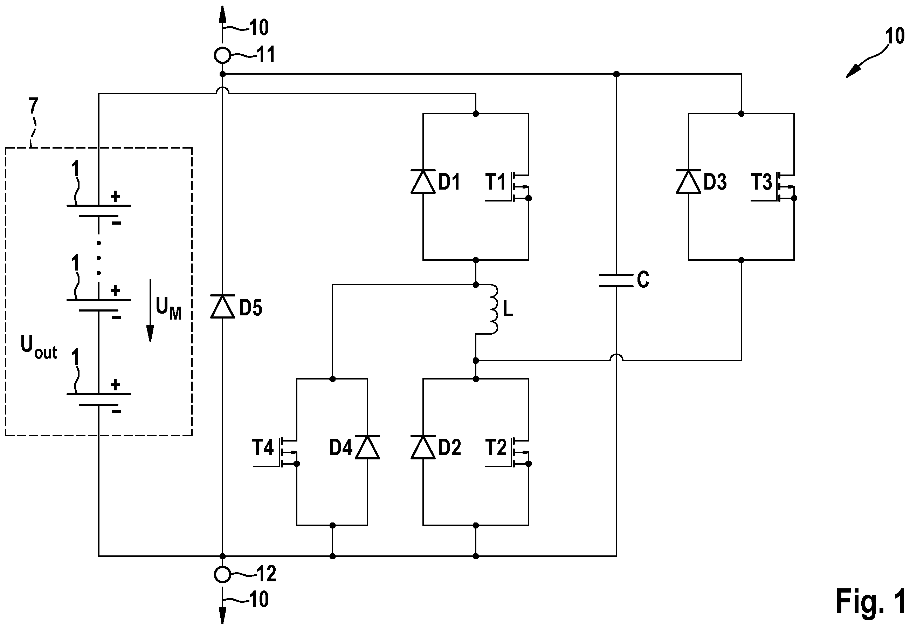

Figur 1 zeigt das Schaltbild eines Ausführungsbeispiels eines UniBB-Moduls 10. Über einen ersten Anschluss 11 und einen zweiten Anschluss 12 ist das UniBB-Modul 10 eingerichtet, mit weiteren UniBB-Modulen 10 zu einem Strang zusammengeschaltet zu werden. Zwischen dem ersten Anschluss 11 und dem zweiten Anschluss 12 sind vier Halbleiterschalter T1, T2, T3, T4, welche bevorzugt als MOSFETs oder IGBTs ausgestaltet sind, mit zugehörigen Freilaufdioden D1, D2, D3, D4 angeordnet. Die Halbleiterschalter T1 bis T4 können mit den jeweiligen Freilaufdioden D1 bis D4 als elektrische Zweipole ZP1 bis ZP4 zusammengefasst werden. Dabei ist ein erster Anschluss des ersten Zweipols ZP1 mit einem positiven Anschluss des Energiespeichers 7 verbunden. Ein zweiter Anschluss des ersten Zweipols ZP1 ist einerseits mit einem ersten Anschluss des vierten Zweipols ZP4 und andererseits über eine Induktivität L mit einem ersten Anschluss des zweiten Zweipols ZP2 sowie einem zweiten Anschluss des dritten Zweipols ZP3 verbunden. Ein erster Anschluss des dritten Zweipols ZP3 ist mit dem ersten Anschluss 11 des UniBB-Moduls 10 verbunden. An dem ersten Anschluss 11 ist auch ein erster Anschluss einer Kapazität C angeschlossen, deren zweiter Anschluss mit dem zweiten Anschluss 12 des UniBB-Moduls 10 verbunden ist. Die zweiten Anschlüsse des zweiten Zweipols ZP2 bzw. des vierten Zweipols ZP4 sind einerseits mit dem zweiten Anschluss 12 des UniBB-Moduls 10 und andererseits mit einem zweiten Anschluss des elektrischen Energiespeichers 7 verbunden. Der Energiespeicher 7 liefert eine Modulspannung U_{M}. Das dargestellte UniBB-Modul 10 weist am ersten Anschluss 11 einen positiven Pol (Pluspol) und am zweiten Anschluss 12 einen negativen Pol (Minuspol) auf. Steuerleitungen zur Ansteuerung der Halbleiterschalter T1 bis T4 sind zur Wahrung der Übersicht nicht dargestellt. Gleiches gilt für Stromsensoren. Der elektrische Energiespeicher 7 kann aus einer oder aus mehreren elektrochemischen Zellen 1 oder anderen elektrischen Energiespeichereinheiten bestehen, welche in diesem Fall gemeinsam die Modulspannung U_{M} bereitstellen. Das UniBB-Modul 10 kann mehrere verschiedene Betriebszustände annehmen, je nachdem, wie die Halbleiterschalter T1 bis T4 betätigt werden. Insbesondere kann ein Bypass, eine Spannungsquelle im Buck- oder Boost-Modus, eine Stromquelle im Buck- oder Boost-Modus, eine Ladeschaltung sowie eine Sperrung realisiert werden. Zu Details wird auf den Stand der Technik verwiesen.

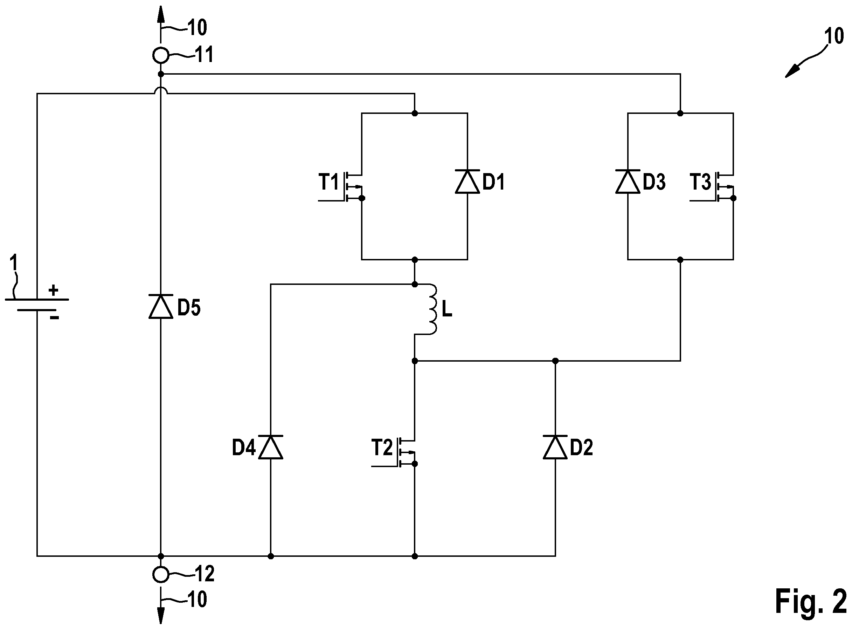

Figur 2 zeigt ein Schaltbild eines alternativen UniBB-Moduls 10 zum in Figur 1 dargestellten UniBB-Modul 10. Gegenüber der in Figur 1 dargestellten Anordnung sind die Kapazität C und der Transistor T4 (nicht jedoch seine Diode D4) entfallen. Zudem ist der Übersichtlichkeit halber lediglich eine einzelne Speicherzelle 1 enthalten.

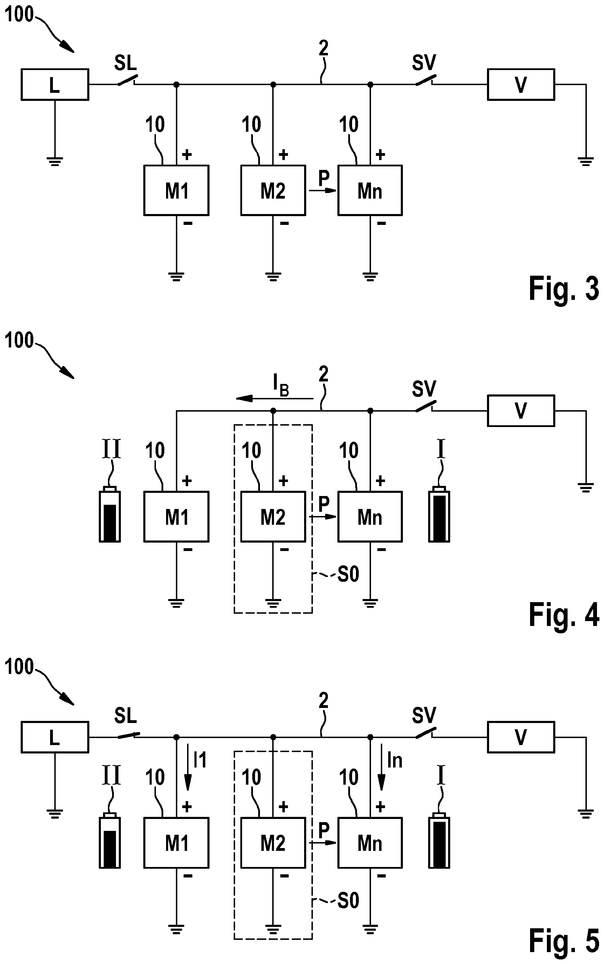

Figur 3 zeigt ein Schaltbild einer Anordnung 100, in welcher parallel geschaltete Speichermodule 10 (einzeln gekennzeichnet mit M1, M2 und Mn) zwischen einem Ladegerät L und einem Verbraucher V angeordnet sind. Das Ladegerät L ist über ein Ladeschütz SL, der Verbraucher V ist über ein Verbraucherschütz SV mit der Parallelschaltung der Module 10 verbindbar. Über einen Pfeil P ist angedeutet, dass weitere Module 10 hinzugeschaltet werden könnten. Die Module 10 sind mit ihrem negativen Anschluss in Richtung einer elektrischen Maße und mit ihrem positiven Anschluss an eine gemeinsame Stromschiene 2 angeschlossen. Auf die unterschiedlichen Schaltzustände wird in Verbindung mit den nachfolgenden Figuren genauer eingegangen.

Figur 4 zeigt die in Figur 3 dargestellte Schaltung 100 in einem Zustand, in welchem das Ladegerät L aufgrund eines geöffneten Ladeschützes SL keine Auswirkung auf die Funktionsweise hat und daher nicht dargestellt ist. Auch der Verbraucher V ist nicht mit den Modulen 10 verbunden, da das Verbraucherschütz SV geöffnet ist. Die dargestellte Anordnung stellt beispielsweise einen Fall dar, in welchem ein elektrisch antreibbares Fahrzeug nicht mit einer Ladestation verbunden ist und sich im Stillstand befindet. Während das Modul Mn einen vollständigen Ladezustand SOC I aufweist, weist das Modul M1 einen zweiten Ladezustand SOC II auf, welcher geringer als der Ladezustand I ist. Über den Strom I_{B} findet ein Balancing zwischen den Modulen M1, Mn statt. Hierzu kann entweder das Modul M1 als Spannungsquelle und das Modul Mn als Stromquelle betrieben werden oder umgekehrt. In beiden Konstellationen sind mehrere Kombinationen von Betriebszuständen aus der Gruppe "geregelt", "ungeregelt", "Boost", "Buck" möglich. Beispielsweise kann beim Betreiben des Moduls M1 als Spannungsquelle und des Moduls Mn als Stromquelle das Modul M1 ungeregelt sein. Dann muss das Modul Mn im Boost-Stromquellenmodus arbeiten, da seine Spannung ja höher sein muss als die Klemmenspannung des Moduls M1. Alternativ ist es möglich, dass das Modul M1 im Buck-Lademodus arbeitet (wobei die anliegende Spannung kleiner als die Klemmenspannung des Moduls Mn ist). Dabei wird das Modul Mn im Stromquellenmodus betrieben. In der Praxis wird das am wenigsten Verlust generierende Verfahren benutzt werden. Dem Fachmann für Spannungswandler sind die entsprechenden Überlegungen geläufig, weshalb für weiterführende Überlegungen auf die einschlägige Fachliteratur verwiesen wird. Das Modul M2 bildet ein am Balancing-Verfahren nicht beteiligten Strang S0. Es wird in einen Sperrmodus versetzt, in welchem ein Stromfluss durch den Strang S0 nicht stattfinden kann. Mit anderen Worten wird eine elektrische Verbindung zwischen der Erde und der Stromschiene 2 innerhalb des Strangs S0 unterbrochen. Sollen mehr als zwei Module, beispielsweise drei oder mehr Module, beim Balancing wechselwirken, so wird angenommen, dass das Modul mit dem höchsten SOC (zum Beispiel das Modul Mn) als Spannungsquelle arbeitet, und die zu ladenden Module (die Module M1, M2) im Stromquellenmodus arbeiten. Ein internes Balancing innerhalb eines Moduls findet in der Regel durch die resistive Methode statt. Das bedeutet, dass der Ladezustand von Zellen 1 mit hohem SOC durch resistive Belastung auf den Stand von Zellen 1 mit niedrigerem SOC gebracht wird. Dieser Vorgang findet periodisch statt, sobald sich das Fahrzeug im Stillstand befindet bzw. der Verbraucher V über das Verbraucherschütz SV von den Modulen 10 getrennt ist. Somit verändert sich auch der SOC von Modulen 10 mit der Zeit selbst, wenn sie nicht in das oben beschriebene Balancing-Verfahren einbezogen sind. Aus diesem Grunde ist ein iteratives Modul-Balancing unter Berücksichtigung aller Module 10 in der oben beschriebenen Weise erforderlich.

Figur 5 zeigt die in Figur 3 dargestellte Schaltung 100 in einem Betriebszustand eines Balancings während des Ladens. Im dargestellten Beispiel habe wieder das Modul M1 einen niedrigeren SOC II als das Modul Mn (welches einen höheren SOC I aufweist). Das Ladegerät L wirke als Spannungsquelle, da die Ladestromregelung der Module 10 so gesteuert wird, dass der Ladestrom I1 in das Modul M1 etwas höher ist als der Ladestrom In in das Modul Mn. Durch geeignete Einstellung der Ladeströme I1, In werden beide Module 10 in derselben Zeit voll geladen. Dieses Prinzip kann auf alle Module 10 verallgemeinert werden. Module 10 mit niedrigerem SOC werden stärker geladen als solche mit höherem SOC. Module, in denen die Speicherzelle 1 (z. B. ein Akkumulator) die Höchstspannung erreicht hat, werden in den Sperrmodus versetzt. Ggf. beginnt dann internes (resistives) Balancing, nach dessen Beendigung das Modul 10 als Ganzes wieder in den Lademodus gehen kann, um seinen SOC zu maximieren. Der Einfachheit halber ist das Verbraucherschütz SV geöffnet, sodass die Schaltung 100 in einem reinen Ladezustand ist.

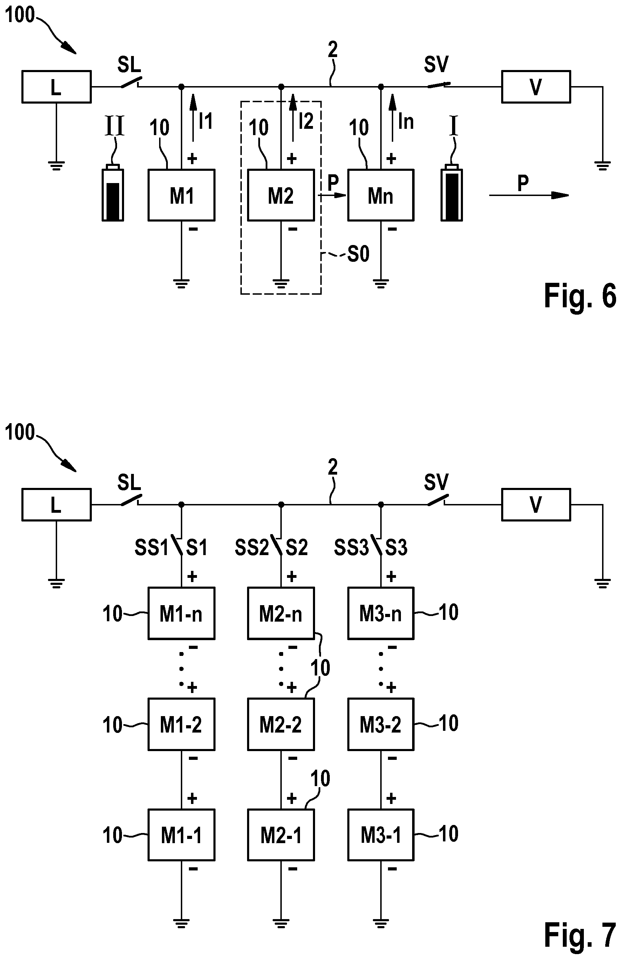

Figur 6 zeigt die in Figur 3 dargestellte Schaltung 100 in einem Balancing-Verfahren während der Entladung. Mit anderen Worten ist das Ladegerät L durch Öffnen des Ladeschützes SL von den Modulen 10 getrennt, während der Verbraucher V durch ein geschlossenes Verbraucherschütz SV über die Stromschiene 2 mit den Modulen 10 verbunden ist. Die Ladezustände I, II entsprechen der Vergleichbarkeit halber den in Verbindung mit den Figuren 4 und 5 diskutierten Verhältnissen. Bei gleichem SOC aller Module 10 ist es wünschenswert, dass die Entladeströme I1, I2, In allen Module 10 gleich sind. Liegen jedoch unterschiedliche SOCs vor (unterschiedliche Ladezustände I, II), so ist es wünschenswert, dass diejenigen Module 10 mit höherem SOC stärker, und Module mit niedrigerem SOC schwächer entladen werden. In Figur 6 müsste hierzu I1 kleiner In herrschen. Da sich die Module 10 ohnehin im Stromquellenmodus befinden, ist eine solche Regelung einfach durchzuführen. Regelgröße für die Stromstärke ist der jeweilige SOC der Module 10. Das Ladegerät L ist durch ein geöffnetes Ladeschütz SL nicht am Balancing beteiligt, sodass ein reiner Entladevorgang veranschaulicht wird.

Figur 7 zeigt die in Figur 3 dargestellte Schaltung 100 für den Fall dar, dass die Module 10 durch weitere, jeweils in Reihe geschaltete Module (im Einzelnen gekennzeichnet durch M1-1 bis M3-n ergänzt worden sind. Die Module M1-x bilden einen ersten Strang S1. Die Module M2-x bilden einen zweiten Strang S2. Die Module M3-x bilden einen dritten Strang S3. In der Realität können selbstverständlich weitere parallele Stränge vorgesehen sein.

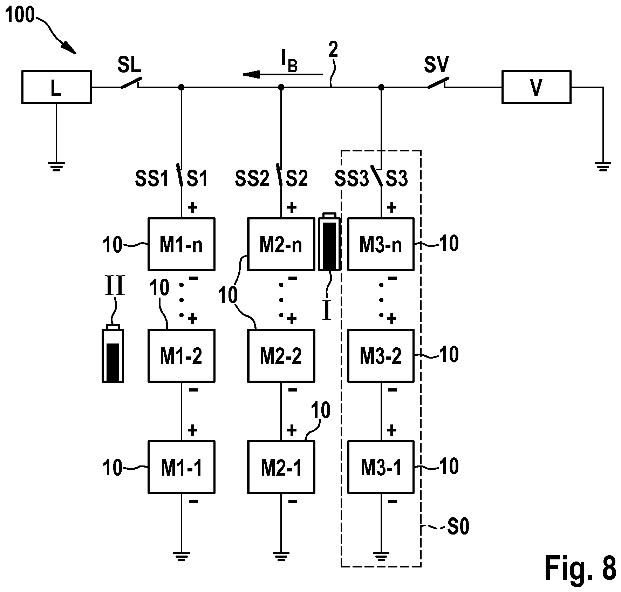

Figur 8 zeigt den in Figur 7 dargestellten Energiespeicher 100 während eines Balancings im Stillstand (ohne Laden). Dies ist der Zustand, in dem die Maschine oder die Anwendung (beispielsweise ein Fahrzeug oder ein PKW als Verbraucher V), welches durch den dargestellten elektrochemischen Energiespeicher 100 angetrieben wird, ohne Beteiligung des Ladegeräts L außer Betrieb genommen wird, indem beispielsweise das Ladeschütz SL und das Verbraucherschütz SV geöffnet werden. In der einfachsten Ausführungsart wechselwirken nur zwei Module 10 in unterschiedlichen Strängen S1, S2, S3 miteinander. In Figur 8 wird beispielsweise angenommen, dass Modul M1-2 einen niedrigeren SOC II hat als das Modul M2-n (welches einen höheren SOC I aufweist). Zuerst werden die Strangschütze SS1 und SS2 geschlossen, und nicht betroffenen Module M3-1 bis M3-n z. B. durch Schließen des Strangschützes SS3 in den Bypass-Modus versetzt. Um die SOCs I, II auszugleichen, muss der Balancing Strom I_{B} von dem Modul M2-n in Richtung des Moduls M1-2 fließen. Somit kann entweder das Modul M1-2 als Spannungsquelle und das Modul M2-n als Stromquelle geschaltet werden oder umgekehrt. In beiden Fällen sind mehrere Kombinationen von Betriebszuständen aus der Gruppe "geregelt", "ungeregelt", "Buck", "Boost" möglich. Beispielsweise kann beim Betrieb des Moduls M1-2 als Spannungsquelle das Modul M1-2 ungeregelt sein. Dann muss das Modul M2-n im Boost-Stromquellenmodus arbeiten, da seine Spannung ja höher sein muss als die Klemmenspannung des Moduls M1-2. Alternativ ist es auch möglich, dass das Modul M1-2 im Buck-Lademodus arbeitet (wobei die anliegende Spannung kleiner als die elektrische Spannung der Speicherzelle 1 des Moduls M1-2 ist), und das Modul M2-n im Stromquellenmodus arbeitet, usw. In der Praxis wird das am wenigsten Verlust generierende Verfahren genutzt werden. Nicht betroffene Module 10 werden in den Bypass-Modus versetzt, in welchem sie einen Stromfluss durch den jeweiligen Strang ungehindert zulassen. Sollen mehr als zwei Module 10, beispielsweise drei (oder mehr) Module 10, wechselwirken, so wird angenommen, dass das Modul 10 mit dem höchsten SOC als Stromquelle arbeitet, während die zu ladenden Module 10 im Spannungsquellenmodus arbeiten. Das Modul 10 mit höherem SOC muss sich in einem anderen Strang befinden, als die beiden Module 10 mit schwächerem SOC, welche sich im gleichen Strang S1, S2, S3 in Serie befinden müssen. Befinden sich die hinsichtlich ihrer Ladungszustände auszugleichenden Module 10 im selben Strang S1, S2, S3, beispielsweise das Modul M1-2 mit niedrigerem SOC II und das Modul M1-n mit höherem SOC I, ist ein direktes Balancing zwischen den betroffenen Modulen nicht möglich. Zuerst muss ein Modul 10 in einem angrenzenden Strang S1, S2, S3 als Ladungsquelle für das schwächere Modul M1-2 genutzt werden, beispielsweise das Modul M3-1. Anschließend kann dann das Modul M3-1 vom stärkeren Modul M1-n wieder geladen werden. Über diesen Zwischenschritt können zwei beliebige Module 10 auch im selben Strang S1, S2, S3 hinsichtlich ihres Ladungszustandes SOC ausgeglichen werden. Internes Balancing innerhalb eines Moduls 10 findet in der Regel durch die resistive Methode statt. Dies bedeutet, dass der Ladezustand SOC von Zellen 1 mit hohem SOC durch resistive Belastung auf den Stand von Zellen 1 mit niedrigerem SOC gebracht werden. Dieser Vorgang findet periodisch statt, sobald sich das Fahrzeug im Stillstand befindet bzw. der Verbraucher V ebenso wie das Ladegerät L nicht an die Module 10 angeschossen sind. Somit verändert sich auch der SOC von Modulen 10 mit der Zeit selbst, wenn sie nicht in das obige Balancing-Verfahren einbezogen sind. Aus diesem Grunde ist ein iteratives Modul-Balancing unter Berücksichtigung aller Module 10 nach der oben beschriebenen Weise notwendig.

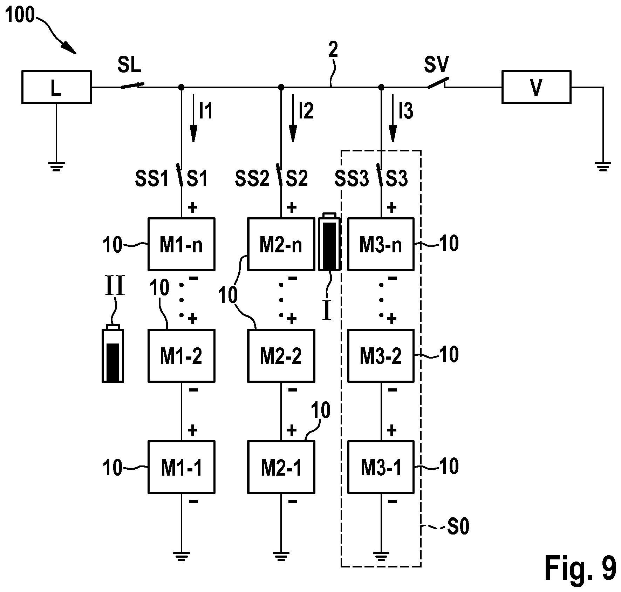

Figur 9 zeigt die in Verbindung mit Figur 7 vorgestellte Schaltung 100 während eines Balancings im Zuge eines Ladevorgangs. Beispielsweise habe das Modul M1-2 einen niedrigeren SOC II als das Modul M2-n (welches einen höheren SOC I aufweist). Das Ladegerät L wirke als Spannungsquelle und die Ladestromregelung der Stränge S1, S2 wird so gesteuert, dass der Ladestrom I1 in dem ersten Strang S1 etwas höher ist als der Ladestrom I2 in dem zweiten Strang S2. Beide Module M1-2, M2-n sollen auf diese Weise in derselben Zeit voll geladen werden. Stränge S1 mit niedrigerem SOC II werden stärker geladen als Stränge S2 mit höherem SOC 1. Module 10, in denen die Speicherzelle 1 (z. B. ein Akkumulator) die Höchstspannung erreicht hat, werden in den Bypass-Modus versetzt. In diesem kann ein Strom I3 ungehindert an den Modulen M3-1 bis M3-n vorbeigeführt werden. Ist das letzte Modul 10 eines Strangs voll geladen, werden alle Module 10 in den Sperrmodus gebracht oder das entsprechende Strangschütz SS1, SS2, SS3 geöffnet.

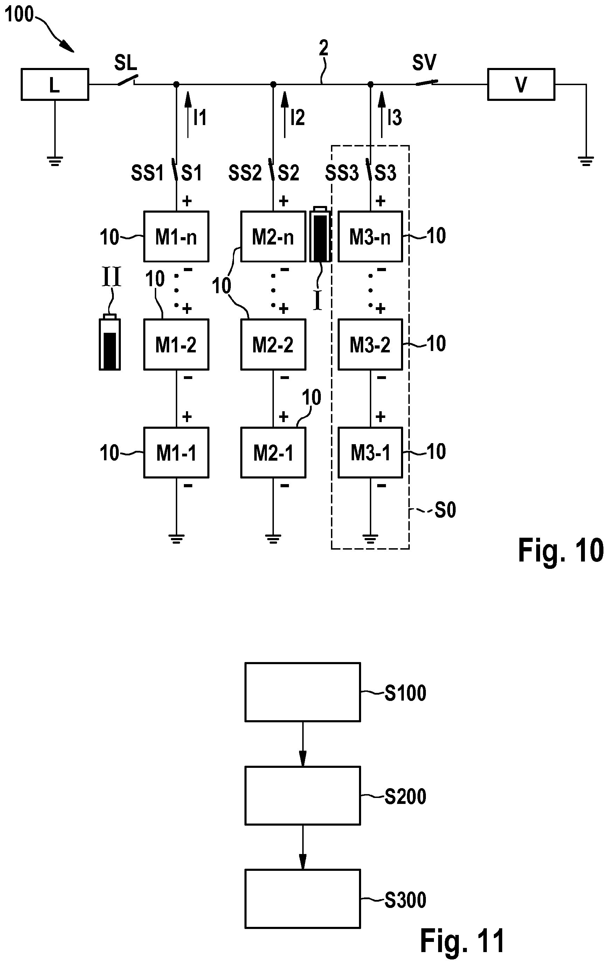

Figur 10 zeigt die in Figur 7 vorgestellte Schaltung 100 während eines Balancings im Zuge der Entladung. Bei gleichem SOC aller Stränge S1, S2, S3 ist es wünschenswert, dass die Entladeströme I1, I2, I3 aller Stränge S1, S2, S3 gleich sind. Liegen jedoch unterschiedliche SOCs I, II vor, wie dies in Figur 10 dargestellt ist, so ist es wünschenswert, dass ein Strang S2 mit höherem durchschnittlichem SOC I stärker, und ein Strang S1 mit niedrigerem durchschnittlichem SOC II schwächer entladen werden. In Figur 10 wäre dann I1 < I2. Da sich die Stränge S1, S2, S3 im Zuge der Entladung sowieso im Stromquellenmodus befinden, ist eine solche Regelung einfach durchzuführen. Die Regelgröße ist hierbei der durchschnittliche SOC der Stränge S1, S2, S3. Sofern die Leistungsanforderungen des Verbrauchers V dies zulassen, können schwache Module M1-2 zeitweilig komplett in den Bypass-Modus versetzt werden. Die Rolle des schwachen Moduls M1-2 kann dann ein Modul mit höherem SOC im Boost-Modus im gleichen Strang S1 übernehmen. Durch diesen Mechanismus kann Modul-Balancing innerhalb eines Stranges S1, S2, S3 stattfinden.

Figur 11 zeigt ein Flussdiagramm veranschaulichend Schritte eines Ausführungsbeispiels eines erfindungsgemäßen Verfahrens. In Schritt S100 wird ein erster Ladezustand eines ersten Speichermoduls 10 erkannt. In Schritt S200 wird ein zweiter Ladezustand eines zweiten Speichermoduls 10 erkannt. Das zweite Speichermodul 10 ist ein UniBB-Modul. Dieses wird in Schritt S300 als Stromquelle betrieben, um den ersten Ladezustand SOC I und den zweiten Ladezustand SOC II einander anzupassen. Mit anderen Worten wird durch den Betrieb des UniBB-Moduls als Stromquelle ein Balancing zwischen dem ersten Speichermodul 10 und dem zweiten Speichermodul 10 durchgeführt.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

## Patentansprüche

1. Verfahren zum Balancing einer Vielzahl parallel zueinander geschalteter Stränge elektrochemischer Speichermodule (10) mittels mindestens eines universellen buck-boost-Moduls (UniBB-Moduls), wobei das buck-boost-Modul über einen Ladeschütz mit einem Ladegerät elektrisch verbindbar und über einen Verbraucherschütz mit einem Verbraucher elektrisch verbindbar ist, umfassend die Schritte
- Erkennen (S100) eines ersten Ladezustandes eines ersten Speichermoduls (M1) in einem ersten Strang der Vielzahl von parallel zueinander geschalteten Strängen,
- Erkennen (S200) eines zweiten Ladezustandes eines zweiten Speichermoduls (M2) in einem zweiten Strang der Vielzahl von parallel zueinander geschalteten Strängen, wobei das zweite Speichermodul (M2) ein buck-boost-Modul ist,
- Betreiben (S300) des ersten Speichermoduls (M1) als Spannungsquelle und des zweiten Speichermoduls (M2) als Stromquelle, um den ersten Ladezustand und den zweiten Ladezustand einander anzupassen,
wobei die Vielzahl Speichermodule (M1, M2, Mn) weitere elektrochemische Speichermodule umfasst, welche in einen Sperrmodus versetzt werden, sofern Sie am Balancing nicht beteiligten Strängen (S0) angehören, und/oder in einen Bypassmodus versetzt werden, sofern Sie am Balancing beteiligten Strängen (S1, S3) angehören, wobei der Sperrmodus eine Unterbrechung des Stromkreises darstellt und/oder der Bypass-Modus einem äußeren Kurzschluss des jeweiligen Speichermoduls entspricht.

2. Verfahren nach Anspruch 1, wobei auch das erste Speichermodul (M1) ein buck-boost-Modul (M1) ist.

3. Verfahren nach Anspruch 1 oder 2, wobei der zweite Ladezustand geringer als der erste Ladezustand ist.

4. Verfahren nach einem der vorstehenden Ansprüche, wobei
- das erste Speichermodul (M1) in einem ersten Betriebsmodus aus der Gruppe "geregelt", "ungeregelt", "buck", "boost", und
- das zweite Speichermodul (M2) in einem zweiten Betriebsmodus aus der Gruppe "geregelt", "ungeregelt", "buck", "boost"
betrieben wird.

5. Verfahren nach einem der vorstehenden Ansprüche, wobei das erste Speichermodul (M1) ungeregelt und das zweite Speichermodul (M2) im Boost- Stromquellen-Betriebsmodus, oder das erste Speichermodul (M1) im Buck-Lade-Modus und das zweite Speichermodul (M2) im Stromquellenmodus betrieben wird.

6. Verfahren nach einem der vorhergehenden Ansprüche, wobei
- sofern lediglich ein Speichermodul (M1, M2, Mn) pro Strang (S1, S2, S3) enthalten ist, ein Speichermodul (M1, M2, Mn) mit einem höchsten Ladezustand als Spannungsquelle und die übrigen, nicht in einen Sperrmodus versetzten elektrochemischen Speichermodule, in einem Stromquellenmodus betrieben werden, und
- sofern mehr als ein Speichermodul (M1, M2, Mn) pro Strang (S1, S2, S3) enthalten ist, ein Speichermodul (M1, M2, Mn) mit einem höchsten Ladezustand in einem Stromquellenmodus und die übrigen, nicht in einen Sperrmodus oder Bypass-Modus versetzten elektrochemischen Speichermodule, in einem Spannungsquellenmodus betrieben werden.

7. Verfahren nach einem der vorstehenden Ansprüche, wobei ein in die Vielzahl elektrochemischer Speichermodule (10) eingeprägter Ladestrom in Abhängigkeit eines jeweiligen Ladezustands der Speichermodule (10) gesteuert wird, so dass insbesondere ein vordefinierter, insbesondere vollständiger, Ladezustand der Speichermodule im Wesentlichen zu einem gleichen Zeitpunkt erreicht wird.

8. Verfahren nach einem der Ansprüche 7 bis 8, wobei elektrochemische Speichermodule (10), welche eine vordefinierte Höchstspannung erreicht haben, in einen Sperrmodus versetzt werden.

9. Verfahren nach einem der vorstehenden Ansprüche, wobei die Stränge (S1, S2, S3) in Abhängigkeit Ihres jeweiligen durchschnittlichen Ladezustands an einem zu liefernden Gesamtstrom der Vielzahl elektrochemischer Speichermodule (10) beteiligt werden, um einen im Wesentlichen gleichen Ladezustand anzunehmen.

10. Elektrochemischer Energiespeicher (100) mit
- einer Vielzahl parallel zueinander geschalteter Stränge (S1, S2, S3) elektrochemischer Speichermodule (M1, M2, Mn), und
- einer Verarbeitungseinheit, wobei die Verarbeitungseinheit eingerichtet ist, ein Verfahren nach einem der vorstehenden Ansprüche durchzuführen.

## Claims

1. Method for balancing a multiplicity of strings of electrochemical storage modules (10) connected in parallel with one another by means of at least one universal buck-boost module (UniBB module), wherein the buck-boost module is able to be electrically connected to a charger via a charging contactor and is able to be electrically connected to a consumer via a consumer contactor, comprising the following steps:
- identifying (S100) a first state of charge of a first storage module (M1) in a first string of the multiplicity of strings connected in parallel with one another,
- identifying (S200) a second state of charge of a second storage module (M2) in a second string of the multiplicity of strings connected in parallel with one another, wherein the second storage module (M2) is a buck-boost module,
- operating (S300) the first storage module (M1) as a voltage source and the second storage module (M2) as a current source in order to adapt the first state of charge and the second state of charge to one another,
wherein the multiplicity of storage modules (M1, M2, Mn) comprises further electrochemical storage modules which are put into a blocking mode if they belong to strings (S0) not involved in the balancing, and/or are put into a bypass mode if they belong to strings (S1, S3) involved in the balancing, wherein the blocking mode constitutes interruption of the circuit and/or the bypass mode corresponds to an external short circuit of the respective storage module.

2. Method according to Claim 1, wherein the first storage module (M1) is also a buck-boost module (M1).

3. Method according to Claim 1 or 2, wherein the second state of charge is lower than the first state of charge.

4. Method according to any of the preceding claims, wherein
- the first storage module (M1) is operated in a first operating mode from the group "regulated", "unregulated", "buck", "boost", and
- the second storage module (M2) is operated in a second operating mode from the group "regulated", "unregulated", "buck", "boost".

5. Method according to any of the preceding claims, wherein the first storage module (M1) is operated unregulated and the second storage module (M2) is operated in the boost current source operating mode, or the first storage module (M1) is operated in the buck charging mode and the second storage module (M2) is operated in the current source mode.

6. Method according to any of the preceding claims, wherein
- if only one storage module (M1, M2, Mn) is contained per string (S1, S2, S3), a storage module (M1, M2, Mn) having a highest state of charge is operated as a voltage source and the other electrochemical storage modules not put into a blocking mode are operated in a current source mode, and
- if more than one storage module (M1, M2, Mn) is contained per string (S1, S2, S3), a storage module (M1, M2, Mn) having a highest state of charge is operated in a current source mode and the other electrochemical storage modules not put into a blocking mode or bypass mode are operated in a voltage source mode.

7. Method according to any of the preceding claims, wherein a charging current impressed into the multiplicity of electrochemical storage modules (10) is controlled depending on a respective state of charge of the storage modules (10) such that in particular a predefined, in particular complete state of charge of the storage modules is substantially attained at an identical point in time.

8. Method according to either of Claims 7 and 8, wherein electrochemical storage modules (10) which have attained a predefined maximum voltage are put into a blocking mode.

9. Method according to any of the preceding claims, wherein the strings (S1, S2, S3), depending on their respective average state of charge, are involved in a total current to be supplied of the multiplicity of electrochemical storage modules (10) in order to assume a substantially identical state of charge.

10. Electrochemical energy store (100) comprising
- a multiplicity of strings (S1, S2, S3) of electrochemical storage modules (M1, M2, Mn) connected in parallel with one another, and
- a processing unit, wherein the processing unit is designed to carry out a method according to any of the preceding claims.

## Revendications

1. Procédé d'équilibrage d'une pluralité de phases de modules d'accumulation électrochimique (10), connectées en parallèle les unes aux autres, au moyen d'au moins un module buck-boost universel (module UniBB), dans lequel le module buck-boost peut être relié électriquement à un chargeur par l'intermédiaire d'un contacteur de charge et peut être relié électriquement à un récepteur par l'intermédiaire d'un contacteur de récepteur, comprenant les étapes consistant à
identifier (S100) un premier état de charge d'un premier module d'accumulation (M1) dans une première phase de la pluralité de phases connectées en parallèle les unes aux autres,
identifier (S200) un deuxième état de charge d'un deuxième module d'accumulation (M2) dans une deuxième phase de la pluralité de phases connectées en parallèle les unes aux autres, le deuxième module d'accumulation (M2) étant un module buck-boost,
exploiter (S300) le premier module d'accumulation (M1) comme une source de tension et le deuxième module d'accumulation (M2) comme une source de courant pour adapter le premier état de charge et le deuxième état de charge l'un à l'autre,
dans lequel la pluralité de modules d'accumulation (M1, M2, Mn) comprend des modules d'accumulation électrochimiques supplémentaires qui sont mis dans un mode inhibition dans la mesure où ils appartiennent à des phases (S0) ne participant pas à l'équilibrage, et/ou sont mis dans un mode dérivation dans la mesure où ils appartiennent à des phases (S1, S3) participant à l'équilibrage, le mode inhibition étant une interruption du circuit électrique et/ou le mode dérivation correspondant à un court-circuit extérieur du module d'accumulation respectif.

2. Procédé selon la revendication 1, dans lequel le premier module d'accumulation (M1) est également un module buck-boost (M1).

3. Procédé selon la revendication 1 ou 2, dans lequel le deuxième état de charge est inférieur au premier état de charge.

4. Procédé selon l'une quelconque des revendications précédentes, dans lequel
- le premier module d'accumulation (M1) est exploité dans un premier mode de fonctionnement issu du groupe « régulé », « non régulé », « buck », « boost », et
- le deuxième module d'accumulation (M2) est exploité dans un deuxième mode de fonctionnement issu du groupe « régulé », « non régulé », « buck », « boost ».

5. Procédé selon l'une quelconque des revendications précédentes, dans lequel le premier module d'accumulation (M1) est non régulé et le deuxième module d'accumulation (M2) est exploité dans le mode de fonctionnement de source de courant boost, ou le premier module d'accumulation (M1) est exploité en mode de chargement buck et le deuxième module d'accumulation (M2) est exploité en mode de source de courant.

6. Procédé selon l'une quelconque des revendications précédentes, dans lequel,
- dans la mesure où seul un module d'accumulation (M1, M2, Mn) par phase (S1, S2, S3) est inclus, un module d'accumulation (M1, M2, Mn) ayant un état de charge le plus élevé est exploité comme une source de tension, et les autres modules d'accumulation électrochimiques, qui ne sont pas mis dans un mode inhibition, sont exploités dans un mode source de courant, et
- dans la mesure où plus d'un module d'accumulation (M1, M2, Mn) par phase (S1, S2, S3) est inclus, un module d'accumulation (M1, M2, Mn) ayant un état de charge le plus élevé est exploité dans un mode source de courant, et les autres modules d'accumulation électrochimiques, qui ne sont pas mis dans un mode inhibition ou un mode dérivation, sont exploités dans un mode source de tension.

7. Procédé selon l'une quelconque des revendications précédentes, dans lequel un courant de charge appliqué à la pluralité de modules d'accumulation électrochimiques (10) est commandé en fonction d'un état de charge respectif des modules d'accumulation (10) de sorte qu'en particulier un état de charge prédéfini, en particulier complet, des modules d'accumulation est atteint substantiellement au même moment.

8. Procédé selon l'une quelconque des revendications 7 à 8, dans lequel les modules d'accumulation électrochimiques (10), qui ont atteint une tension maximale prédéfinie, sont mis dans un mode inhibition.

9. Procédé selon l'une quelconque des revendications précédentes, dans lequel les phases (S1, S2, S3) contribuent à un courant total à fournir de la pluralité de modules d'accumulation électrochimiques (10) en fonction de leur état de charge moyen afin d'adopter un état de charge substantiellement identique.

10. Accumulateur d'énergie électrochimique (100), comprenant
- une pluralité de phases connectées en parallèle les unes aux autres (S1, S2, S3) de modules d'accumulation électrochimiques (M1, M2, Mn), et
- une unité de traitement, l'unité de traitement étant aménagée pour exécuter un procédé selon l'une quelconque des revendications précédentes.
